(19) Europäisches Patentamt / European Patent Office / Office européen des brevets

(11) **EP 3 131 061 A1**

(12) **EUROPEAN PATENT APPLICATION**

(43) Date of publication:
**15.02.2017 Bulletin 2017/07**

(51) Int Cl.:
*G06T 7/20* (2017.01)        *H04N 19/53* (2014.01)

(21) Application number: **16182635.9**

(22) Date of filing: **03.08.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **05.08.2015 EP 15306269**

(71) Applicant: **Thomson Licensing
92130 Issy-les-Moulineaux (FR)**

(72) Inventor: **HEPPER, Dietmar
30419 Hannover (DE)**

(74) Representative: **Rolland, Sophie
TECHNICOLOR
1-5, rue Jeanne d'Arc
92130 Issy-les-Moulineaux (FR)**

(54) **METHOD AND APPARATUS FOR HIERARCHICAL MOTION ESTIMATION USING DFD-BASED IMAGE SEGMENTATION**

(57) In hierarchical motion estimation, in each motion estimation hierarchy level, a pixel block matcher for comparing correspondingly sampled pixel values of a current image and a delayed previous image is used in order to compute a motion vector for every pixel, wherein - by evaluating displaced frame differences in the measurement window - a segmentation of the measurement window into different moving object regions is performed. The corresponding segmentation information is stored, and the stored segmentation information is used as an initial segmentation mask for motion estimation in the following finer level of the motion estimation hierarchy. In the following finer level of the motion estimation hierarchy an updated segmentation information is determined. This processing continues until the finest level of said motion estimation hierarchy is reached. The resulting segmentation information values of successive search window positions can be combined.

Fig. 3

**Description**

Technical field

The invention relates to a method and to an apparatus for hierarchical motion estimation wherein a segmentation of the measurement window into different moving object regions is performed.

Background

Estimation of motion between frames of image sequences is used for applications such as targeted content and in digital video encoding. Known motion estimation methods are based on different motion models and technical approaches such as gradient methods, block matching, phase correlation, 'optical flow' methods (often gradient-based) and feature point extraction and tracking. They all have advantages and drawbacks. Orthogonal to and in combination with one of these approaches, hierarchical motion estimation allows a large vector search range and is typically combined with block matching, cf. [1],[2]. In motion estimation a cost function is computed by evaluating the image signal of two image frames inside a measurement window.

Motion estimation faces a number of different situations in image sequences. A challenging one is when motion is estimated for an image location where there are different objects moving at different speed and/or direction. In this case the measurement window covers these different objects so that the motion estimator is distracted by objects other than the intended one.

In [3] a method of estimating correspondences between stereo pairs of images is described. In determining the cost function, the method targets to weight pixels "in proportion of the probability that the pixels have the same disparity". Pixels with similar colour and located nearby are preferred by means of two kinds of weights (involving factors determined empirically): one related to colour difference, the other one related to spatial distance. Unfortunately that method has inherent problems with periodic structures because pixels with same or similar colour but a certain distance apart may mislead the motion estimator. In addition, this concept does not attempt to consider different motion.

[4] describes reliable motion estimates for image sequences even in situations or locations in an image where the measurement window of the motion estimator covers different objects with different motion. A motion vector is provided that typically applies to the centre pixel of the measurement window. It is therefore most appropriate for estimating the motion of points or pixels of interest and for tracking them. If motion shall be estimated for every pixel in an image, this method can be used in principle. However, since segmentation information is stored for the complete (subsampled) measurement window for every location a vector is estimated for, memory requirements can become huge (e.g. for the later, finer levels of the hierarchy). Moreover, no advantage is taken of multiple pixel-related segmentation information being present as a result of overlapping measurement window positions.

In particular, [4] describes a method adapted for hierarchical motion estimation in which motion vectors are refined in successive levels of increasing search window pixel density and/or decreasing search window size, including the steps:

- within each hierarchical level, after finding an optimum vector at least one pixel, determining based on the optimum vector the displaced frame difference or absolute displaced frame difference for each pixel of the search window;
- determining within the search window two or more groups of these pixels, wherein each of these pixel groups is characterised by a different range of displaced frame difference values or absolute displaced frame difference values for the pixels;
- carrying out a segmentation of the search window into different moving object regions by forming pixel areas according to the groups, which areas represent a segmentation mask for the search window;
- estimating for at least one of the segmentation areas a corresponding motion vector.

Thus, with every hierarchy level the hierarchical motion estimator provides true motion vectors closer towards object boundaries (e.g. of a truck on a road), due to the decreasing grid size (i.e. distance of pixels for which a vector is estimated) and/or decreasing size of the measurement window, but not at the boundaries themselves. In the motion compensated image, high 'displaced frame differences' (DFD) remain around moving objects, in structured areas of medium-size moving objects, in or around uncovered background regions, and throughout small moving objects, or at least at their front and rear if they are less textured (e.g. a car moving behind a bush). [4] thus describes to translate DFDs or absolute DFDs into probabilities of belonging to the same or another object, resulting in a more continuous decision than a binary one. Such probability, related to an object, reflects also the part of the exposure time for which the camera sensor element has seen that object as mentioned above.

As a first approach, a mask with three possible values '0', '0.5' and '1' is computed by comparing the DFD or absolute DFD of each pixel $(x,y)$ against two thresholds:

$$mask(x,y) = \begin{cases} 0 & \text{if } |DFD(x,y)| < thr_{low} \\ 1 & \text{if } |DFD(x,y)| > thr_{high} \\ 0.5 & \text{otherwise} \end{cases} \quad (1)$$

The '0' and '1' values denote different object areas while the value of (e.g.) '0.5' expresses some uncertainty. A low absolute DFD thus turns into a mask value of '0' which represents object number '0'. $mask(x,y)$ represents a finer and continuous function that translates the absolute DFD into a probability between '0' and '1' to belong to the same or another object.

Summary of invention

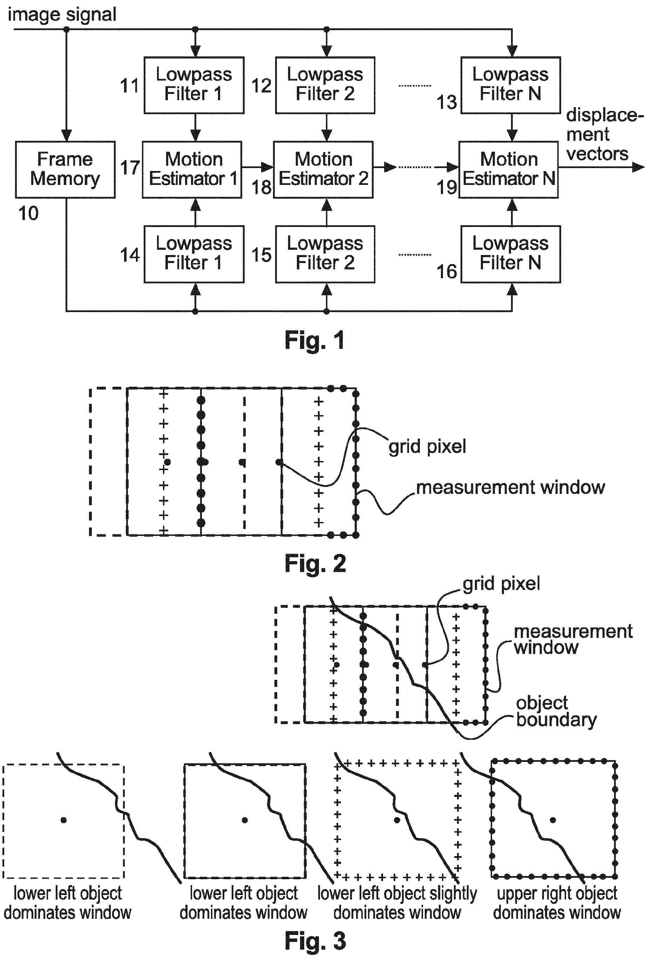

The inventive processing solves this issue, as disclosed in claim 1. An apparatus that utilises this method is disclosed in claim 2.
Advantageous additional embodiments of the invention are disclosed in the respective dependent claims.
A hierarchical motion estimation is performed which includes a number of hierachy levels 17, 18, ..., 19 as shown in Fig. 1. In each level, the image is prefiltered, e.g. by means of a 2D mean value filter 11, 12, 13 of a certain window size, the filtering strength being reduced from level to level, e.g. by reducing the filter window size. In each level a motion estimation 17, 18, ..., 19 (e.g. a block matching motion estimation) is used in order to determine a motion vector for every pixel of interest or for every pixel of the whole frame in a regular grid. Such block matcher receives as reference signal a corresponding image signal delayed by a frame in a frame memory 10 from a corresponding 2D mean value filter 14, 15, ..., 16. Within the measurement window of the block matchers 17, 18, ..., 19, the image signal for the two frames compared is subsampled as allowed according to the strength of the prefilter. A motion vector (update) is computed in steps/stages 17, 18, ..., 19, e.g. by a log(D)-step search or a full search, thereby optimising a cost function, for example by minimising SAD (sum of absolute differences) or SQD (sum of squared differences). Motion estimation is done with integer-pel resolution first, followed by sub-pel refinement (thus also reducing computational complexity).
By evaluating in steps/stages 17, 18, ..., 19 the displaced frame differences (DFD) in the measurement window - after finding an optimum vector at a certain pixel - a segmentation of the measurement window into different moving object regions is performed e.g. in steps/stages 17, 18, ..., 19. The segmentation information - also referred to as mask - is stored and used as an (initial) mask for motion estimation in the next level of the hierarchy, and a new segmentation information is determined at the end of that level, and so on. Because in case of motion estimation for neighbouring grid pixels the measurement windows are typically overlapping, their segmentation information is merged or combined in an appropriate manner (e.g. in steps/stages 17, 18, ..., 19), so as to improve the performance and reliability of the segmentation. The resulting segmentation information can be stored in a dedicated frame memory thus reducing storage requirements. For using the stored segmentation information for motion estimation in the next level of the hierarchy, segmentation information is read from the segmentation information memory for the pixels in the (subsampled) measurement window under consideration.
As an enhancement, only the image information in the measurement window that is considered as belonging to the same object as the centre pixel of the measurement window is included in calculating (e.g. in steps/stages 17, 18, ..., 19) the cost function of the motion estimator, in order to obtain a vector that is specific to that very object or is part of it.
The described processing allows estimating motion and tracking specific image content or points of interest with improved reliability and accuracy in situations or image locations where different objects move at different speed and/or direction. It prevents the motion estimator from being distracted from other objects while attempting to determine a motion vector for an image location or pixel which is part of the object in focus, or for any pixel in the image in a regular grid. The processing provides reliable motion estimates for every pixel in an image of an image sequence, and it does so in an efficient way.
In principle, the inventive method is adapted for hierarchical motion estimation, including:

   a) using - in each motion estimation hierarchy level - in a pixel block matcher of a corresponding motion estimator a measurement window for comparing correspondingly (sub)sampled pixel values of a current image frame and a delayed previous image frame in order to compute a motion vector for every pixel of interest, wherein - by evaluating displaced frame differences in the measurement window - a segmentation of the measurement window into different moving object regions is performed;
   b) storing corresponding segmentation information;
   c) using said stored segmentation information as an initial segmentation for motion estimation in the following finer level of the motion estimation hierarchy;
   d) determining in said following finer level of the motion estimation hierarchy an updated segmentation information;

e) continuing the processing with step b) until the finest level of said motion estimation hierarchy is reached.

In principle the inventive apparatus is adapted for hierarchical motion estimation, said apparatus including means adapted to:

a) using - in each motion estimation hierarchy level - in a pixel block matcher of a corresponding motion estimator a measurement window for comparing correspondingly (sub)sampled pixel values of a current image frame and a delayed previous image frame in order to compute a motion vector for every pixel of interest, wherein - by evaluating displaced frame differences in the measurement window - a segmentation of the measurement window into different moving object regions is performed;
b) storing corresponding segmentation information;
c) using said stored segmentation information as an initial segmentation for motion estimation in the following finer level of the motion estimation hierarchy;
d) determining in said following finer level of the motion estimation hierarchy an updated segmentation information;
e) continuing the processing with step b) until the finest level of said motion estimation hierarchy is reached.

Brief description of drawings

Exemplary embodiments of the invention are described with reference to the accompanying drawings, which show in:

Fig. 1    Block diagram of a hierarchical motion estimator;
Fig. 2    Example of four horizontally following grid pixels, spaced apart by 64 pixels, for which a vector is estimated, with measurement windows of size 257 x 257 pixels around them, as for the 1 st of 6 levels of the motion estimation hierarchy;
Fig. 3    Example of four horizontally following grid pixels and their measurement window containing an object boundary (top), and the resulting situations of object boundary location in the four measurement windows (bottom, same parameters as in Fig. 2);
Fig. 4    Example of a small foreground object moving in front of a large background object, with successive measurement window positions (top), and resulting situations of object boundary location in the measurement windows (bottom, same parameters as in Fig. 2);
Fig. 5    Ratio (a) of measurement window sizes in a 6-level motion estimation hierarchy vs. the sum of window sizes, the corresponding ratio (b) for squared measurement window sizes, compared with a ratio (c) of 6:5:4:3:2:1 as in Table 2;
Fig. 6    Scans around the centre pixel C of a measurement window, for comparing segmentation information and identifying neighbours belonging to the same object (white pixels);
Fig. 7    Principle of segmentation information in case of two small objects (marked white) in front of a larger background object (marked black, left side), and isolation of the centre object (marked white) by the 'circle' scanning and neighbour comparison method (right side);
Fig. 8    Frame of an HD sequence containing also global motion;
Fig. 9    DFD (x4) images of this frame, with six integer-pel levels of hierarchy and partial measurement window at image boundary, without DFD-based segmentation in the left side images and with DFD-based segmentation and use in motion estimation in the right side images, in the 1 st, 2nd and 3rd hierarchy level from top to bottom;
Fig. 10    DFD (x4) images of this frame, with six integer-pel levels of hierarchy and partial measurement window at image boundary, without DFD-based segmentation in the left side images and with DFD-based segmentation and use in motion estimation in the right side images, in 4th, 5th and 6th hierarchy level from top to bottom;
Fig. 11    Segmentation information of this frame, with six integer-pel levels of hierarchy and partial measurement window at image boundary resulting from DFD-based segmentation, in 1st, 2nd, 3rd, 4th, 5th and 6th hierarchy level from top left to bottom right;
Fig. 12    x-components of the displacement vector of this frame in the left side images and y-components of the displacement vector of this frame in the right side images, after six integer-pel levels of hierarchy, with partial measurement window at image boundary, without use of DFD-based segmentation in the top images and with use of DFD-based segmentation in the bottom images, wherein light grey represents positive displacement, dark grey represents negative displacement and medium grey represents zero displacement;
Fig. 13    Luminance PSNR for the motion-compensated frame of this HD sequence, along the six integer-pel levels of the motion estimation hierarchy, partial measurement window at image boundary, (a) without use of DFD-based segmentation and (b) with use of DFD-based segmentation.

Description of embodiments

Even if not explicitly described, the following embodiments may be employed in any combination or sub-combination.

*I. Identifying object locations in the complete image - whole-frame mode*

*I.1 Motion estimation type and memory requirements*

The motion estimation method described in [4] includes segmentation of the measurement window and fits well the case of estimating motion vectors for pixels of interest ('pixels-of-interest mode') since location information - which is available for every pixel in the subsampled measurement window - needs to be stored only around the pixels of interest, and their number will typically be low. When estimating motion vectors for all picture elements in an image ('whole-frame mode') the same processing can be applied, i.e. location information obtained from motion estimation for every grid point or pixel for which a vector is estimated in a level of the hierarchy could be stored in the same way. This would require a storage space proportional to the number of grid points for which a vector is estimated, multiplied by the number of pixels in the subsampled measurement window.
This is roughly proportional to

$$\frac{numLines}{iGrid}\ \frac{numPels}{iGrid}\ (\frac{iMeasWin}{iSub})^2 \qquad \text{numLines/iGrid * numPels/iGrid * (iMeasWin/iSub)\textasciicircum2, with numLines}$$

= number of lines of the image, numPels = number of pels per line of the image, iGrid = horizontal and vertical distance of pixels for which a motion vector is estimated, *iMeaswin* = horizontal and vertical width in pixels of the measurement window (can also be a rectangular window), iSub = quasi-subsampling factor or horizontal and vertical distance of pixels in the measurement window that are evaluated in determining the cost function.
As can be seen in the following, determining and storing segmentation information independently for each measurement window position can be sufficient for the first levels of the hierarchy, due to the large iGrid values. On the other hand, no benefit would be taken from the information obtained from the overlapping measurement windows. E.g. in the first one of six levels with a measurement window of size 257x257 pixels and a grid size of 64 pixels, about 75% of the pixels in the measurement window are the same as for the previous grid pixel for which a vector has been estimated. This is depicted in Fig. 2 for four horizontally following grid pixels for which a vector is estimated.
As an alternative, location information obtained from motion estimation for neighbouring grid points - with their overlapping measurement windows - can be combined in order to generate an object mask or segmentation information which then can be used and refined in the next level of the hierarchy, and so on.
This kind of processing is facilitated by considering and merging/combining the location information based on, or given by, the discrete or continuous segmentation information or probabilities obtained by DFD-based segmentation (cf. [4]). The memory requirement is then given by numLines* numPels.
The following Table 1 shows that, for an example of numLines = 1088, numPels = 1920 and a 6-level hierarchy, in the first (*l* = 1) and second (*l* = 2) motion estimation hierarchy level the method of (a) storing segmentation information individually for the measurement window around every grid point would require less storage space than the method of (b) combining the segmentation information into one image. For the third hierarchy level both methods have almost the same memory requirement, and for the last three levels method (b) is clearly more efficient in terms of memory requirement.
Note that DFD-based segmentation can be carried out in different colour spaces, e.g. by evaluating luminance (Y) or RGB or YUV (solely or jointly). Even different masks can be determined for different colour components such as R, G and B for application examples where they do not match exactly (e.g. in case of storing the three colour components of a film on different grey films individually).

| level | 1 | 2 | 3 | 4 | 5 | 6 |
|---|---|---|---|---|---|---|
| iGrid | 64 | 32 | 16 | 8 | 4 | 2 |
| *iMeasWin* | 257 | 209 | 129 | 65 | 25 | 13 |
| iSub | 16 | 8 | 8 | 4 | 4 | 2 |
| Memory *a* [pixels] | 147390 | 1487160 | 2358240 | 9432960 | 6397440 | 25589760 |
| Memory *b* [pixels] | 2088960 | 2088960 | 2088960 | 2088960 | 2088960 | 2088960 |

(continued)

| level | 1 | 2 | 3 | 4 | 5 | 6 |
|---|---|---|---|---|---|---|
| Ratio *a*/*b* | .070557 | .711914 | 1.128906 | 4.515625 | 3.0625 | 12.25 |
| *a* is smaller | TRUE | TRUE | FALSE | FALSE | FALSE | FALSE |

I.e., in the whole-frame mode, without combining segmentation information in the measurement window at and around neighbouring grid pixels, storing and using the segmentation information individually for each window position can already be applied with some benefit in the first motion estimation hierarchy levels.

*I.2 Combining new and previous segmentation information*

*I.2.1 Segmentation information from neighbouring measurement window positions*

For combining segmentation information of neighbouring window positions in a level of the hierarchy, when a motion vector is estimated at a current pixel location, the measurement window is placed around it and mask or probability information is obtained for every pixel in the quasi-subsampled measurement window. When a motion vector is then estimated at/for the next pixel location, e.g. to the right, the measurement window is placed around this pixel and segmentation information is obtained for some more pixels at the right side of the window and for some less pixels at the left side of the window, and for many same pixels in the rest of the subsampled measurement window. While the measurement window is shifted over a current pixel when estimating motion for a number of pixels to its left and right (according to the width of the measurement window), segmentation information becomes available for this pixel with every new window position, as depicted by Fig. 2. In the example in Fig. 2, one fourth of the measurement window area at the right contains news pixels (compare dot-marked window with preceding cross-marked window). When additionally taking into account vertically preceding window positions, the contribution of new pixels is only one sixteenth of the window area in this case.
All these segmentation information or probability value contributions for the current pixel are to be combined, for example by a linear combination (e.g. average) and/or a non-linear combination (e.g. median, max) and/or a logical combination, in order to form a segmentation information for this pixel, maybe while considering also its neighbourhood. Inversion of a segmentation information or probability value contribution of a pixel may be included where necessary, such as where the pixel is supposed to belong to another object than the centre pixel of the measurement window because its segmentation information value is much different from/inverse to the segmentation information value at the centre pixel.

Fig. 3 shows an example of four subsequent grid pixels and their corresponding measurement window, now containing an object boundary, and resulting situations of object boundary location in the measurement windows. In the fourth case (dot-marked window) where the other object is dominating the window area, the segmentation information will need to be inverted before combining it with the information obtained before.

To this end, the segmentation information of a pixel as contributed from overlapping windows of neighbouring window positions needs to be evaluated. After having obtained the segmentation information in the measurement window at the dashed position in Fig. 3, the segmentation information determined for the next, continuous-line marked window position is analysed for pixels in the area of overlap. If the segmentation information is similar for the majority of pixels in this area, it will be combined with the dashed window position-related information e.g. by averaging. If, however, the segmentation information is rather opposite for the majority of pixels in this area, its values will first be inverted and then combined with dashed window position-related segmentation information values. This decision can be taken by comparing the average segmentation information value for the pixels in the overlap area against a threshold value such as 0.5 or even 0.75, and inverting the segmentation information value if that threshold value is exceeded.

In a simplified embodiment, only the segmentation information value of the centre pixel is compared against such a threshold. I.e., the segmentation information values in the present measurement window are inverted in case the segmentation information value of the centre pixel is more than a threshold value differing from the stored segmentation information value at this pixel position.

In addition to the overlap situations shown in Fig. 3, there is also overlap in the vertical direction which is considered in combining/merging the segmentation information.

The segmentation is assumed to be most reliable in cases where the other object covers just a small part of the measurement window so that the motion estimator nicely matches the major part of it. For the same reason, segmentation information reliability is considered to be high in the first levels of the hierarchy with their large measurement windows. This can be considered in the combining or merging algorithm, e.g. by weighting, at a certain pixel location, the contributions from different window positions depending on the relation of the quantities of pixels in the measurement window belonging to different objects. This can be approximated by the absolute average segmentation information value for the pixel location, which may typically occupy a range between 0.5 (two objects of equal size) and 1 (just one object). This span might can be decreased or enlarged artificially, e.g. to 0.25...1.

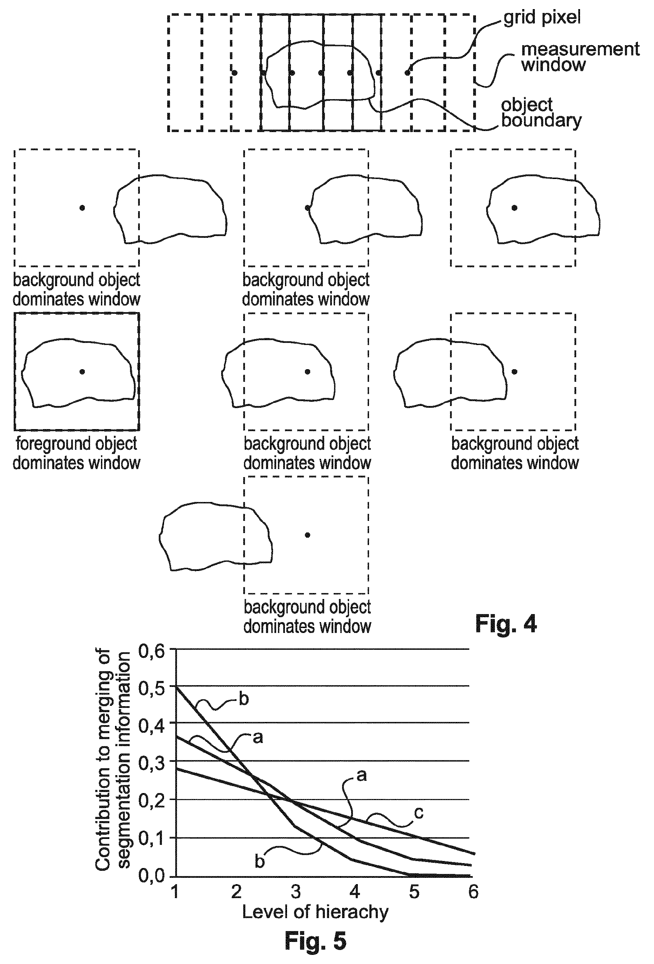

An example of a small foreground object moving in front of a large background object is depicted in Fig. 4. While for most positions of the measurement window the large background object dominates the measurement window, there are a few situations where the smaller foreground object has a major influence on the best match found and on the segmentation derived from its DFDs.

It is assumed that a pixel $(x, y)$ is located within a measurement window for $k$ subsequent times (k = 1...4 in the horizontal example of Fig. 3). With the first measurement position, e.g. in the top left of an image, that pixel receives the segmentation information $mask$ $(x, y, 1)$. If with the second measurement window position it lies within the overlap area, it will receive the segmentation information $mask(x, y, 2)$, which is to be combined with the first one for storage and for later or subsequent use. This combining can be performed by averaging the two segmentation information masks with equal or different weights, e.g. $mask_{new}(x, y) = (mask(x, y, 1) + mask(x, y, 2))/2$.

If with the third measurement position the pixel still lies within the overlap area, it receives the segmentation information $mask(x, y, 3)$, which is to be combined with the stored segmentation information, e.g. by averaging them with equal or different weights. If all three shall be stored with equal weights, the number of times $n_{SI}(x,y)$ for which the pixel has received segmentation information is stored as well, so that e.g.

$$mask_{new}(x,y) = \frac{1}{3} mask(x,y,3) + \frac{2}{3} mask_{old}(x,y)$$ And similarly with a fourth measurement position, e.g.

$$mask_{new}(x,y) = \frac{1}{4} mask(x,y,3) + \frac{3}{4} mask_{old}(x,y)$$

Or in general:

$$mask_{new}(x,y) = \frac{1}{n_{SI}(x,y)+1} mask(x,y,k) + \frac{n_{SI}(x,y)}{n_{SI}(x,y)+1} mask_{old}(x,y)$$

This is continued in case of later vertical overlap, and finally this leads to equal weights for the contributions resulting from the neighbouring measurement window positions.

As an alternative, adaptive weights can be used that take into account the reliability of the segmentation, e.g. based on the number of pixels in the measurement window that get a 'good' segmentation, i.e. a low mask value. In this case the sum of previous weights can be stored.

An object label, e.g. a number, is assigned in addition. This way, either (a) a complete frame of mask probability information is formed for every object, or (b) one frame containing mask probability information is formed along with a frame array containing object labels, or (c) both mask probabilities and object labels are combined into a single number or information sample representing both. Probability entries will typically be somewhat lower near supposed object boundaries.

*I.2.2 Segmentation information from different levels of the hierarchy*

Following a spatial interpolation (linear or non-linear, e.g. majority of 3 of 4 neighbours), the final output mask of a level of the motion estimation hierarchy is used as an input mask of motion estimation in the next level of the motion estimation hierarchy: when estimating an update vector at a certain pixel location, a mask section of the size and respective position of the measurement window is extracted and used as an input mask by the block matcher.

The output mask generated for a present measurement window position from the remaining DFDs as described above is either stored in a separate array (i.e. combined into the new mask of the complete image), or is merged in place (e.g. in a weighted fashion, for instance old vs. new or left/top vs. right/bottom, or by replacement) into the existing (input) mask, thereby refining it immediately.

In this case the combination or merging process described above can be carried further by considering either equal or individual weights for the different levels of the motion estimation hierarchy. E.g. after finalising the segmentation of the first level of the hierarchy as $mask_1(x,y)$, all its $n_{SI}(x,y)$ can be virtually set to '1' and new ones can be created and used when determining the mask in the second level as:

$$mask_{2,new}(x,y) = \frac{1}{2}mask_1(x,y) +$$

$$\frac{1}{2}\left(\frac{1}{n_{SI}(x,y)+1}mask(x,y,k) + \frac{n_{SI}(x,y)}{n_{SI}(x,y)+1}mask_{old}(x,y)\right),$$

and so on for the other levels *l*:

$$mask_{l,new}(x,y) = \frac{1}{l}mask_{l-1}(x,y) +$$

$$\frac{l-1}{l}\left(\frac{1}{n_{SI}(x,y)+1}mask(x,y,k) + \frac{n_{SI}(x,y)}{n_{SI}(x,y)+1}mask_{old}(x,y)\right)$$

in case of equal weights.

Alternatively, first the mask of the new level *l* is formed as described in section *1.2.1,* and subsequently it is combined with the mask of the previous level according to

$$mask_{l,new}(x,y) = \frac{1}{l}mask_l(x,y) + \frac{l-1}{l}mask_{l-1}(x,y)$$

Because the measurement window size decreases from one level to the next, it will less often contain image information from different objects. Therefore the mask combination during the later (i.e. finer) levels is to be carried out carefully. To this end, different reliability, and hence weights, can be assigned to the different levels *l* of the motion estimation hierarchy. A higher (i.e. coarser) level gets a higher weight than the following level - e.g. in the ratios of 6:5:4:3:2:1,

$$mask_{all}(x,y) = \frac{\sum_{l=1}^{L}(L+1-l)mask_l(x,y)}{\sum_{l=1}^{L}l}$$

or according to the ratio of the measurement window sizes $w_l$ because a larger window should mean a more reliable segmentation as it more likely covers different objects (see the Table 2 below):

$$mask_{all}(x,y) = \frac{\sum_{l=1}^{L}w_l mask_l(x,y)}{\sum_{l=1}^{L}w_l},$$ or according to the ratio of the squared measurement window sizes:

$$mask_{all}(x,y) = \frac{\sum_{l=1}^{L}w_l^2 mask_l(x,y)}{\sum_{l=1}^{L}w_l^2}.$$ In the example of Table 2 the first three levels of the

hierarchy have a contribution of (a) 85% or (b) even 96% or (c) 72% to the overall combination of segmentation information (see also Fig. 5).

Table 2: Ratio of measurement window sizes in a 6-level

| | level | 1 | 2 | 3 | 4 | 5 | 6 |
|---|---|---|---|---|---|---|---|
| | *iMeasWin* | 257 | 209 | 129 | 65 | 25 | 13 |
| | Ratio *a* [1/13] | .36819 19.769 | .29943 16.077 | .18481 9.9231 | .093123 5 | .035817 1.9231 | .018625 1 |
| | Ratio *b* [1/169] | .50269 390.82 | .33245 258.47 | .12665 98.467 | .032156 25 | .0047568 3.6982 | .0012862 1 |
| | Contribution | 6 | 5 | 4 | 3 | 2 | 1 |

(continued)

| level | 1 | 2 | 3 | 4 | 5 | 6 |
|---|---|---|---|---|---|---|
| Ratio c | 0.28571 | 0.2381 | 0.19048 | 0.14286 | 0.09524 | 0.04762 |

| hierarchy vs. (a) the sum of window sizes (sum is 698) and (b) the same for squared window sizes (sum is 131390), and compared with (c) a ratio of 6:5:4:3:2:1 (sum is 21) |
|---|

The weighted combination can also be implemented successively, starting with the first hierarchy level $l = 1$ and the second hierarchy level ($l = 2$):

$$mask_{12}(x,y) = \frac{w_1}{w_1+w_2} mask_1(x,y) + \frac{w_2}{w_1+w_2} mask_2(x,y) \,,$$

$$mask_{123}(x,y) = \frac{w_1+w_2}{w_1+w_2+w_3} mask_{12}(x,y) + \frac{w_3}{w_1+w_2+w_3} mask_3(x,y) \,,$$

etc. And similarly in case of weights based on squared window sizes.

The major objective of using the mask is to enhance motion estimation rather than segmenting the image into semantically distinguished objects.

In summary there are the following modes determining the merging of segmentation information of neighbouring measurement window positions and different levels of the motion estimation hierarchy:

1: add new segmentation information to segmentation image and increment number *numSumdVal* (or $n_{SI}$) of merged entries;

2: weighted adding of new segmentation information based on existing *numSumdVal* with the target of equal weights for all entries of all measurement window positions and levels of the motion estimation hierarchy;

3: weighted adding of new segmentation information, based on the number $l$ of the present motion estimation hierarchy level and on the existing value *numSumdVal*, which is assumed to be computed only within the present level $l$. Weighting of the levels is done, e.g. by 6:5:4:3:2:1 in case of a 6-level motion estimation hierarchy;

4: like mode 3, but weighting of the levels according to the ratio of measurement window sizes *iMeasWin*;

5: like mode 3, but weighting of the levels according to the ratio of squared measurement window sizes;

6: maximum operation, otherwise like mode 5;

7: like mode 2 within a level, but no merging between levels;

8: merging by only considering pixels on the subsampling grids in the present level and the previous level of the motion estimation hierarchy, applying equal weights to all integer-pel levels of the motion estimation hierarchy (weighted add where a pixel also has segmentation information in the previous mask, otherwise use solely new mask entry), interpolating after merging for use in the next level.

Processing in modes 1 and 2 is carried out across the levels of the motion estimation hierarchy without any weighting among them, every new entry has equal weight.

*I.2.3 Inversion of segmentation information prior to merging*

As already mentioned above, the present *mask(x, y, k)* may need to be inverted prior to merging. For this purpose it is compared with the stored mask information in the overlap area of the measurement window, see section 1.2.1. The overlap area is given by those pixels for which segmentation information has already been stored, i.e. the number of times $n_{SI}(x,y)$ for which the pixel has received segmentation information is $\geq 1$. This comparison can be limited to the present level of the hierarchy (by initialising $n_{SI}(x,y)$ with zero at the beginning of each level) or go across all levels (e.g. by initialising $n_{SI}(x,y)$ with zero only at the beginning of the first level).

The simplest method is to compare the mask of the centre pixel of the measurement window at its present position with the stored information which has been obtained from at least one or two previous measurement window positions (see Fig. 2). If, in case of a bi-level mask, the present mask has the opposite value of the stored information, then it is inverted prior to the merging. If, in case of a continuous mask, the absolute difference between the two is larger than a preselected threshold value of e.g. 0.5 or even 0.75, then the present mask is inverted prior to merging. Otherwise the present mask is not inverted prior to merging.

Reliability of this kind of operation can be improved by taking into account a spatial neighbourhood of the centre pixel - up to the complete overlap area. In this case, if the absolute value of the average of the differences is larger than a characteristic value or threshold of e.g. 0.5 or even 0.75, the mask is inverted prior to merging. Also another measure such as the average product of mask values can be evaluated, e.g. by way of correlation rather than by differences.

For using the segmentation information in motion estimation, the mask around the centre pixel - as extracted from the mask memory - may need to be re-inverted if it is not zero or not small, i.e. if it is greater than a threshold of e.g. 0.5 or even 0.75.

Using original and inverted versions of the segmentation information typically holds in cases where there are just two objects moving relative to each other - a foreground and a background object.

If there are more objects partly covering each other while moving, a segmentation into more levels is necessary, or each object has its own segmentation mask memory assigned to it.

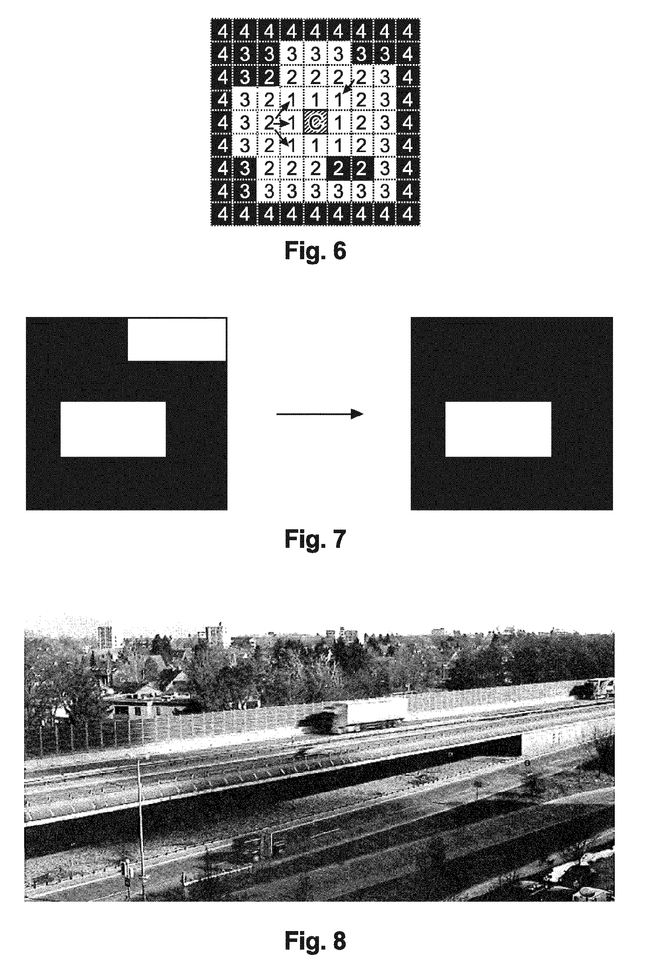

If there are small objects present in the measurement window which are surrounded by a large background object such that they do not touch each other, these small objects typically appear in the segmentation information separately and can therefore be separated from the large background object for use in motion estimation: where a motion vector is estimated for a pixel lying within such a small object, the segmentation information of the background object and the other small object(s) can be masked off so that motion of the first isolated object is estimated. This is achieved by scanning around the centre pixel at a growing distance and comparing the mask information of that pixel with its neighbour or neighbours as seen towards the centre pixel C, as shown in Fig. 6. At the corners of such a square-shaped scan, comparison is done with the neighbour lying next to it in a diagonal direction towards the centre pixel. At all other pixel positions along the scan, comparison is done with the neighbour lying next to it in the direction towards the centre pixel as well as with its two neighbours, as shown by the arrows in Fig. 6. The square-shaped scans around the centre pixel are done in clockwise and in counter-clockwise directions, in order to cope with more complex object contours, e.g. holes (see the two black holes within the white object in Fig. 6). A pixel along the scan is marked in a dedicated mask as belonging to the same object as the centre pixel if its mask information is similar to the mask of the centre pixel (i.e. if the pixel is probably belonging to the same object) AND if it has a direct neighbour also marked as belonging to that object. While this object mask can be initialised, e.g. with zeros, for all pixels in the measurement window and a value of '1' for the centre pixel, any new pixel thus detected as belonging to the same object is marked with a value of '1', too.

Using this kind of processing, smaller objects lying around the centre pixel can be separated from another small object not connected to it, as shown in Fig. 7.

For the motion estimation itself, the mask thus modified will just express whether or not a pixel belongs to the same object as the centre pixel, because for that object the match shall be found in motion estimation. All other pixels will be excluded from determining the cost function and it will not matter whether they belong to just one or more other objects.

*II. Segmentation on a finer sampling grid*

Motion estimation performance in terms of resulting motion vectors and computational load benefits from pre-filtering and quasi-subsampling in the measurement window. Up to now segmentation was also tied to that concept. However, once the best match has been found for the present pixel of interest or grid pixel within one level of the hierarchy, segmentation can also be performed separately on a finer sampling grid, e.g. even on the original integer-pel sampling grid. I.e., one approach is to use the same measurement window size for performing segmentation, but to carry it out on the original sampling grid by evaluating every pixel.

In addition, segmentation can be carried out on the non-filtered, original frames. In connection with this embodiment there is no need to adapt thresholds to the different levels of the hierarchy.

Moreover, segmentation can use its own adapted window sizes in the levels of the hierarchy. While a small measurement window can be used in motion estimation in the last levels of the hierarchy, segmentation can use a larger window in order to increase the probability of containing more image information near object boundaries, thereby improving the segmentation.

As a benefit from performing segmentation on the original sampling grid, no interpolation of segmentation information would be necessary, and the segmentation mask would always have the best spatial resolution, given by the original sampling grid.

For using the segmentation mask in motion estimation, the segmentation information of the pixels in the quasi-subsampled measurement window can be extracted from the mask memory. Pre-filtering of the mask in order to match the pre-filtering of the image signals might not be necessary, or could have some drawback, because a mask level of zero should be maintained.

*III. Use of object locations in interpolation of motion vectors*

When interpolating the vector field of one level of the hierarchy before starting the next level, the occurrence of objects with different motion can be considered. Typically a vector of a pixel on the denser new vector grid is interpolated bilinearly from the 4 or 2 neighbours of the less dense grid of the previous level of the motion estimation hierarchy. Instead, in case of four neighbours a majority decision can be taken, or the median is used.

*VI.Results*

Some results obtained in the whole-frame mode are shown in the following. Hierarchical motion estimation using six integer-pel levels has been performed for an HD video sequence representing global motion and containing trucks and cars on a highway, without and with DFD-based segmentation. Fig. 8 shows one particular frame of this HD video sequence.
The following setting has been used:

- first grid pixel is $1 + \frac{iGrid}{2}$ in the first level of the hierarchy and '1' otherwise, in order to guarantee that grid pixels for which vectors are estimated in the levels of the hierarchy lie on matching rasters;
- the segmented measurement window is used as a continuous weighting function;
- the segmentation mask is determined as an exponential continuous function;
- modeMerge = 8, i.e. merge segmentation information of neighbouring measurement window positions and levels of the hierarchy by only considering pixels on subsampling grids in the present and previous levels of the hierarchy, applying equal weights to all integer pel levels of the hierarchy (weighted add where a pixel also has segmentation information in the previous mask, otherwise use new mask entry solely), interpolation afterwards for use in next level;
- threshold for (average) segmentation information to decide for mask inversion: 0.75.

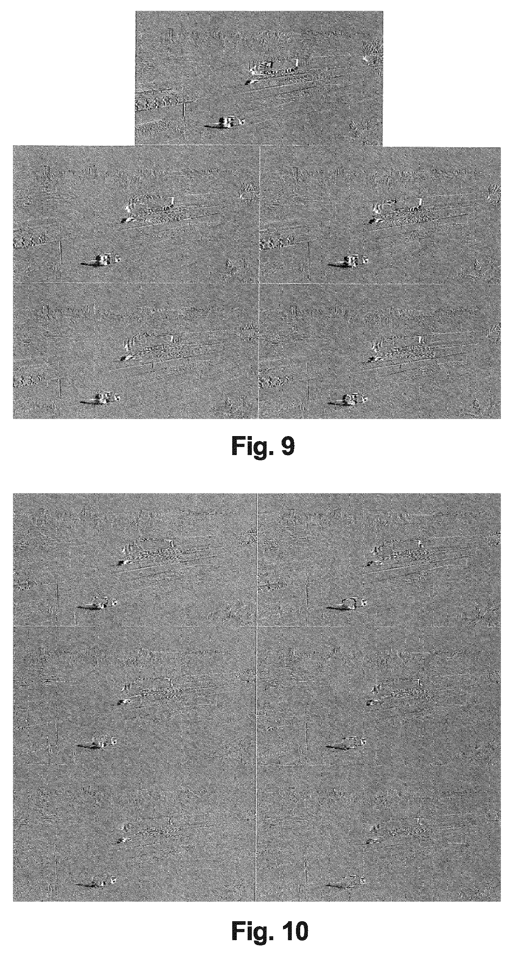

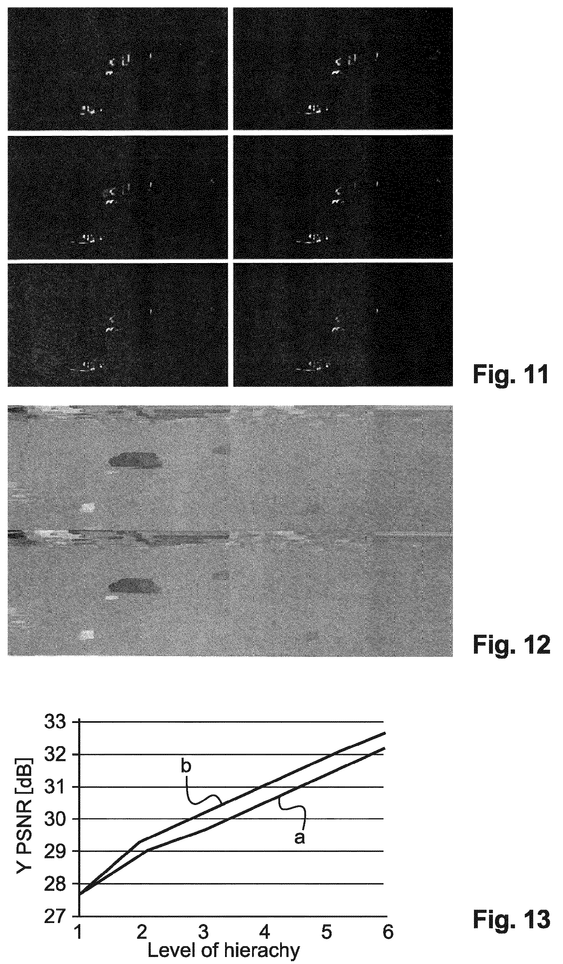

The DFD-based segmentation leads to improved motion estimation around moving objects as shown in Fig. 9 and Fig. 10 along the levels of the hierarchy. With every level of the hierarchy the grid of pixels for which vectors are estimated gets denser and boundary areas where vectors cannot be estimated due to the window size get smaller. This holds for both cases without and with DFD-based segmentation. As a result, motion estimation in boundary areas is improved along the levels of the hierarchy as seen e.g. near the left image boundary in the low fence or wall in the front border of the highway. As the estimated vector field gets denser, DFDs are reduced also around moving objects such as trucks and cars. With additional DFD-based segmentation this effect is enhanced, and also behind moving objects, e.g. the big truck in the middle of the image, the DFDs are reduced as facilitated by better vectors.
The segmentation information obtained along the levels of the hierarchy by merging the segmentation information of neighbouring measurement window positions and of successive levels of the hierarchy is shown in Fig. 11. The upper left image shows the result of merging the segmentation information of neighbouring measurement window positions in the first level of the hierarchy. The light grey areas mark part of smaller moving objects different from the big background object. As mask information is obtained for pixels in the quasi-subsampling grid in the measurement window, it has a low spatial resolution in the beginning. The lighter the mask information of a pixel, the higher the probability that the pixel belongs to another object than the surrounding object (marked black).
Along the levels of the hierarchy the segmentation information gets sharper and changes somewhat in intensity. As high DFDs in the measurement window lead to lighter mask contributions and occur especially before and behind moving objects and in moving object areas of high contrast, this holds similarly for the merged segmentation information contributed by neighbouring measurement window positions. For use in motion estimation this is sufficient as the segmentation information successfully masks off pixels that would harm motion estimation to be performed for the object or area around the centre pixel of the measurement window.
Section *I.2.3* describes a processing of scanning around the centre pixel at a growing distance and comparing the mask information of that pixel with its neighbour(s) as seen towards the centre pixel. This method successfully helps distinguishing between smaller objects with different motion, like the big truck in the middle moving to the left and the smaller car before it moving to the right, as seen in the displacement vector x and *y* components shown in Fig. 12, in comparison with the situation without DFD-based segmentation.
Note that the images shown are provided for the purpose of comparing certain methods and are not meant to be an optimum result. E.g. the inhomogeneous vectors in the sky area can be avoided by updating a vector only in non-homogeneous regions using threshAllowME > 0 starting with the second level of the hierarchy. The effect of vectors extending to the bottom right of the centre truck can be reduced by a neighbour vector comparison.

Fig. 13 shows the luminance PSNR for a motion compensated version of the frame of the HD sequence along the six integer-pel levels of the hierarchy without and with using DFD-based segmentation - which is the average squared DFD (see Fig. 10) on a dB scale. The PSNR is significantly improved along the levels of the hierarchy, and the final improvement by DFD-based segmentation after the 6th level in this example is about 0.5dB, which is an average over the complete image, while the improvement itself is contributed by the enhanced areas in and around moving objects solely where the gain is therefore much higher.

The invention is applicable to many applications requiring motion estimation and/or object or point tracking, such as broadcast and web streaming applications, surveillance or applications of Targeted Content.

The described processing can be carried out by a single processor or electronic circuit, or by several processors or electronic circuits operating in parallel and/or operating on different parts of the complete processing.

The instructions for operating the processor or the processors according to the described processing can be stored in one or more memories. The at least one processor is configured to carry out these instructions.

[1] M. Bierling, "Displacement Estimation by Hierarchical Blockmatching", Proc. of 3rd SPIE Symposium on Visual Communications and Image Processing, Cambridge, USA, November 1988, SPIE, vol.1001 Visual Communications and Image Processing, pp.942-951

[2] R. Thoma, M. Bierling, "Motion Compensating Interpolation Considering Covered and Uncovered Background", Proc. of the 1st International Workshop on 64kbit/s Coding of Moving Video, Hannover, 18 April 1989

[3] K.J. Yoon, I.S. Kweon, "Locally Adaptive Support-Weight Approach for Visual Correspondence Search", Proc. of the International Conference on Ubiquitous Robots and Ambient Intelligence, pp.506-514, 2004

[4] EP 15305162.8

**Claims**

1. Method for hierarchical motion estimation, including:

    a) using - in each motion estimation hierarchy level (11, 14; 12, 15; 13, 16) - in a pixel block matcher of a corresponding motion estimator (17, 18, 19) a measurement window for comparing correspondingly sampled pixel values of a current image frame and a delayed (10) previous image frame in order to compute a motion vector for every pixel of interest, and determining a segmentation information representative of segmentation of the measurement window into different moving object regions, wherein said segmentation information comprises a per-pixel segmentation mask and wherein a segmentation information value for a pixel is assigned to a moving object region in case where a displaced frame difference resulting from an optimum motion vector in the measurement window is larger a threshold ;
    b) storing corresponding segmentation information;
    c) using said stored segmentation information as an initial segmentation for motion estimation in the following finer level of the motion estimation hierarchy;
    d) determining in said following finer level of the motion estimation hierarchy an updated segmentation information based on a remaining displaced frame difference resulting from the optimum motion vector of said stored segmentation information;
    e) continuing the processing with steps b) to d) until the finest level of said motion estimation hierarchy is reached.

2. Apparatus for hierarchical motion estimation, said apparatus including means adapted to:

    a) using - in each motion estimation hierarchy level (11, 14; 12, 15; 13, 16) - in a pixel block matcher of a corresponding motion estimator (17, 18, 19) a measurement window for comparing correspondingly sampled pixel values of a current image frame and a delayed (10) previous image frame in order to compute a motion vector for every pixel of interest, determining a segmentation information representative of segmentation of the measurement window into different moving object regions, wherein said segmentation information comprises a per-pixel segmentation mask and wherein a segmentation information value for a pixel is assigned to a moving object region in case where a displaced frame difference resulting from an optimum motion vector in the measurement window is larger a threshold;
    b) storing corresponding segmentation information;
    c) using said stored segmentation information as an initial segmentation for motion estimation in the following finer level of the motion estimation hierarchy;
    d) determining in said following finer level of the motion estimation hierarchy an updated segmentation information based on a remaining displaced frame difference resulting from the optimum motion vector of said stored segmentation information;

e) continuing the processing with steps b) o d) until the finest level of said motion estimation hierarchy is reached.

3. Method according to claim 1, or apparatus according to claim 2, wherein segmentation information for different measurement window positions is combined (17, 18, 19) at a given pixel in an overlap area by a linear, non-linear or logical combination of the corresponding segmentation information values from the different neighboring measurement windows so as to improve the reliability of the segmentation information.

4. Method according to the method of claim 1 or 3, or apparatus according to the apparatus of claim 2 or 3, wherein for determining said motion vectors a cost function is calculated (11, 14; 12, 15; 13, 16), and only image information in said measurement window that belongs to the same object as the centre pixel of said measurement window is included in calculating said cost function, in order to obtain a motion vector that is specific to that object.

5. Method according to the method of one of claims 1, 3 and 4, or apparatus according to the apparatus of one of claims 2 to 4, wherein said segmentation information is determined only in coarser levels of said motion estimation hierarchy.

6. Method according to the method of one of claims 3 to 5, or apparatus according to the apparatus of one of claims 3 to 5, wherein said segmentation information for different pixel positions is represented by segmentation mask values, and segmentation information values for different pixel positions are combined, and wherein for such combining a segmentation mask value related to a following measurement window position is inverted in case its value is more than a threshold value.

7. Method according to the method of one of claims 3 to 5, or apparatus according to the apparatus of one of claims 3 to 5, wherein said segmentation information for different pixel positions is represented by segmentation mask values, and segmentation information values for different pixel positions are combined, and wherein for such combining a segmentation mask value of the centre pixel of a following measurement window position is inverted in case its value is more than a threshold value differing from the segmentation information value at the centre pixel of the current measurement window position.

8. Method according to the method of one of claims 3 to 7, or apparatus according to the apparatus of one of claims 3 to 7, wherein for said segmentation information value combining a weighting is performed, such that the contributions from different window positions are depending on the relation of the quantities of pixels in the measurement window belonging to different objects.

9. Method according to the method of one of claims 1 and 3 to 8, or apparatus according to the apparatus of one of claims 2 to 8, wherein said segmentation information is a binary information or a continuous-value information.

10. Method according to the method of one of claims 1 and 3 to 9, or apparatus according to the apparatus of one of claims 2 to 9, wherein weights of the displaced frame differences for determining a cost function in motion estimation or block matching are derived from said segmentation information.

11. Method according to the method of one of claims 4 to 10, or apparatus according to the apparatus of one of claims 4 to 10, wherein the image signals in said measurement window are subsampled for obtaining said cost function and/or the segmentation information.

12. Method according to the method of one of claims 1 and 3 to 11, or apparatus according to the apparatus of one of claims 2 to 11, wherein said segmentation is performed on an original sampling grid without pre-filtering.

13. Digital video signal that is encoded according to the method of one of claims 1 and 3 to 12.

14. Computer program product comprising instructions which, when carried out on a computer, perform the method according to the method of one of claims 1 and 3 to 12.

EP 3 131 061 A1

**Fig. 1**

grid pixel

measurement window

**Fig. 2**

grid pixel

measurement window

object boundary

lower left object dominates window

lower left object dominates window

lower left object slightly dominates window

upper right object dominates window

**Fig. 3**

grid pixel

measurement window

object boundary

background object dominates window

background object dominates window

foreground object dominates window

background object dominates window

background object dominates window

background object dominates window

**Fig. 4**

Contribution to merging of segmentation information

0,6

0,5

0,4

0,3

0,2

0,1

0,0

b

a

a

c

b

1  2  3  4  5  6

Level of hierachy

**Fig. 5**

Fig. 6

Fig. 7

Fig. 8

Fig. 9

Fig. 10

**Fig. 11**

**Fig. 12**

**Fig. 13**

Europäisches
Patentamt

European
Patent Office

Office européen
des brevets

# EUROPEAN SEARCH REPORT

Application Number

EP 16 18 2635

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DIEHL ET AL: "Object-oriented motion estimation and segmentation in image sequences", SIGNAL PROCESSING. IMAGE COMMUNICATION, ELSEVIER SCIENCE PUBLISHERS, AMSTERDAM, NL, vol. 3, no. 1, February 1991 (1991-02), pages 23-56, XP024241769, ISSN: 0923-5965, DOI: 10.1016/0923-5965(91)90028-Z [retrieved on 1991-02-01] | 1,2,5,9, 12-14 | INV. G06T7/20 H04N19/53 |
| Y | * page 28, right-hand column * * page 36 * | 3,4,10, 11 | |
| A | * Section "4.1 Segmentation based on inter-frame information"; page 37 - page 40 * * page 40; figure 12 * * page 45; figure 18 * * page 47; table 1 * ----- | 6-8 | |
| Y | YUE-MENG CHEN ET AL: "Frame rate up-conversion of compressed video using region segmentation and depth ordering", COMMUNICATIONS, COMPUTERS AND SIGNAL PROCESSING, 2009. PACRIM 2009. IEEE PACIFIC RIM CONFERENCE ON, IEEE, PISCATAWAY, NJ, USA, 23 August 2009 (2009-08-23), pages 431-436, XP031549222, ISBN: 978-1-4244-4560-8 | 3 | TECHNICAL FIELDS SEARCHED (IPC) G06T H04N |
| A | * page 431, right-hand column - page 432, left-hand column * * figure 1 * ----- -/-- | 6-8 | |

The present search report has been drawn up for all claims

| Place of search | Date of completion of the search | Examiner |
|---|---|---|
| Munich | 23 December 2016 | Maier, Werner |

EP 3 131 061 A1

# EUROPEAN SEARCH REPORT

Europäisches Patentamt
European Patent Office
Office européen des brevets

Application Number

EP 16 18 2635

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MATTOCCIA STEFANO ET AL: "A fast segmentation-driven algorithm for accurate stereo correspondence", 2011 INTERNATIONAL CONFERENCE ON 3D IMAGING (IC3D), IEEE, 7 December 2011 (2011-12-07), pages 1-6, XP032478224, DOI: 10.1109/IC3D.2011.6584384 ISBN: 978-1-4799-1577-4 [retrieved on 2013-08-21] * page 2, right-hand column * | 4,10,11 | |
| Y,D | THOMA R ET AL: "Motion compensating interpolation considering covered and uncovered background", SIGNAL PROCESSING. IMAGE COMMUNICATION, ELSEVIER SCIENCE PUBLISHERS, AMSTERDAM, NL, vol. 1, no. 2, October 1989 (1989-10), pages 191-212, XP024241731, ISSN: 0923-5965, DOI: 10.1016/0923-5965(89)90009-X [retrieved on 1989-10-01] * page 195, right-hand column * * Section "3.2.4 Measurement window size and subsampling"; page 197 - page 198 * | 11 | |

TECHNICAL FIELDS SEARCHED (IPC)

The present search report has been drawn up for all claims

| Place of search | Date of completion of the search | Examiner |
|---|---|---|
| Munich | 23 December 2016 | Maier, Werner |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 15305162 A

**Non-patent literature cited in the description**

- **M. BIERLING.** Displacement Estimation by Hierarchical Blockmatching. *Proc. of 3rd SPIE Symposium on Visual Communications and Image Processing, Cambridge, USA, November 1988, SPIE, vol.1001 Visual Communications and Image Processing,* 942-951

- **R. THOMA ; M. BIERLING.** Motion Compensating Interpolation Considering Covered and Uncovered Background. *Proc. of the 1st International Workshop on 64kbit/s Coding of Moving Video,* 18 April 1989
- **K.J. YOON ; I.S. KWEON.** Locally Adaptive Support-Weight Approach for Visual Correspondence Search. *Proc. of the International Conference on Ubiquitous Robots and Ambient Intelligence,* 2004, 506-514